# FASCICULE DE BREVET EUROPEEN

(11) **EP 3 220 007 B1**
(45) Date de publication et mention de la délivrance du brevet: **29.08.2018**
(21) Numéro de dépôt: 17159009.4
(22) Date de dépôt: 02.03.2017
(51) Int. Cl.: F16F 15/121, F16F 15/133

(54) **MÉCANISME DE FILTRATION DE TORSION À CHEMIN DE CAME**
TORSIONSDÄMPFER MIT EINER STEUERKURVE
TORSIONAL DAMPER COMPRISING A CAM GUIDE

(30) Priorité: 16.03.2016 FR 1652210; 16.03.2016 FR 1652211
(43) Date de publication de la demande: 20.09.2017
(73) Titulaire: Valeo Embrayages, 80009 Amiens Cedex 2 (FR)
(72) Inventeur: FENIOUX, Daniel, 80009 Amiens (FR)
(74) Mandataire: Cardon, Nicolas

(56) Documents cités:
- WO-A1-2011/006264
- WO-A1-2016/020585
- FR-A1- 3 000 155
- FR-A1- 3 008 152

## Description

### DOMAINE TECHNIQUE DE L'INVENTION

L'invention se rapporte à un mécanisme de filtration de torsion, et plus particulièrement à un mécanisme de filtration de torsion pour dispositif de transmission de couple, notamment pour véhicule automobile, en particulier pour un dispositif d'embrayage, par exemple pour un double volant amortisseur, pour un oscillateur pendulaire, pour un amortisseur à longue course, placé en amont ou en aval d'une friction d'embrayage, ou en aval d'un convertisseur de couple.

### ETAT DE LA TECHNIQUE ANTERIEURE

On connaît des amortisseurs de couple comportant un premier organe tournant autour d'un axe de révolution, un deuxième organe tournant autour de l'axe de révolution, et mobile par rapport au premier organe tournant entre deux positions angulaires de fin de course, et des ressorts à boudin, droits ou cintrés, disposés entre les deux organes tournants pour permettre de transformer de l'énergie cinétique en énergie potentielle et réciproquement de l'énergie potentielle en énergie cinétique lorsque les organes tournants tournent l'un par rapport à l'autre, le cas échéant avec interposition d'éléments de dissipation d'énergie. Ces amortisseurs à ressorts à boudin ont un encombrement relativement important, et n'offrent pas de grande liberté de conception pour adapter aux besoins la raideur angulaire entre les organes tournants. De plus, leur comportement dynamique, en tenant compte de l'effet de centrifugation, est difficile à maîtriser, notamment du fait des frottements des ressorts contre les parois de leurs logements.

Il a été proposé dans le document FR 3 000 155 de remplacer les ressorts à boudin par des lames flexibles portées par l'un des organes tournants de l'amortisseur, ces lames flexibles formant des chemins de came associés à des suiveurs de came portés par l'autre organe tournant. Le mouvement relatif de rotation entre les organes tournants provoque une flexion des lames flexibles lorsque les suiveurs de came se déplacent sur les chemins de cames. Le profil des chemins de cames peut être adapté pour faire varier la raideur angulaire en fonction du débattement angulaire.

Mais ce document n'enseigne pas de loi simple pour déterminer un profil de came conforme à une loi souhaitée, ce qui impose de nombreux tâtonnements. De plus, les profils de cames proposés ne sont pas adaptés à une production industrielle, notamment parce qu'ils se prêtent mal aux contrôles dimensionnels de qualité.

### EXPOSE DE L'INVENTION

L'invention vise à remédier aux inconvénients de l'état de la technique et à proposer un amortisseur qui apporte la liberté de dimensionnement souhaitée tout en préservant un profil de came simple.

Pour ce faire est proposé, selon un premier aspect de l'invention, un mécanisme de filtration de torsion pour dispositif de transmission de couple, notamment pour automobile, en particulier pour un dispositif d'embrayage, le mécanisme de filtration de torsion comportant :
- un premier organe tournant apte à tourner autour d'un axe de révolution du mécanisme de filtration de torsion,
- un deuxième organe tournant apte à tourner autour de l'axe de révolution et à osciller par rapport au premier organe tournant,
- au moins un chemin de came porté par l'un des premier et deuxième organes tournants, le chemin de came étant fixe en rotation autour de l'axe de révolution par rapport à l'organe tournant portant le chemin de came et lié élastiquement à l'organe tournant portant le chemin de came de manière à présenter un degré de liberté de mouvement par rapport à l'organe tournant portant le chemin de came et
- au moins un suiveur de came associé au chemin de came et porté par l'autre des premiers et deuxième organes tournants, le suiveur de came étant apte à parcourir le chemin de came entre une extrémité rétrograde du chemin de came et une extrémité directe du chemin de came, en provoquant un déplacement variable du chemin de came par rapport à l'organe tournant portant le chemin de came.

Selon l'invention, le chemin de came présente, dans un plan de coupe perpendiculaire à l'axe de révolution, un profil comportant une pluralité d'arcs de cercle deux à deux adjacents et ayant deux à deux un point d'intersection, le profil étant tel qu'au moins deux arcs de cercle adjacents parmi les arcs de cercle ont des rayons de courbure différents, finis ou infinis, et des tangentes confondues au point d'intersection.

Lors de la conception, on peut très simplement augmenter ou diminuer la raideur pour un débattement angulaire donné entre les deux organes tournants, en augmentant ou en diminuant le rayon de l'arc de cercle correspondant. Dans le cas d'un chemin de came convexe, le passage d'un arc de rayon de courbure donné à un arc de rayon de courbure plus élevé dans un sens d'oscillation donné, correspond à une augmentation de la raideur angulaire lorsque le suiveur de came parcourt le chemin de came dans ce sens, et à une diminution lorsque le suiveur de came parcourt le chemin de came en sens contraire. Dans le cas d'un chemin de came concave, le passage d'un arc de rayon de courbure donné à un arc de rayon de courbure plus élevé dans un sens d'oscillation donné, correspond à une diminution de la raideur angulaire lorsque le suiveur de came parcourt le chemin de came dans ce sens, et à une augmentation lorsque le suiveur de came parcourt le chemin de came en sens contraire. Ces relations sont vraies que le chemin de came soit tourné à l'opposé de l'axe de révolution ou vers l'axe de révolution.

Les dimensions du profil de came constitué d'une succession d'arcs de cercle peuvent aisément être vérifiées pour déterminer la conformité d'une pièce en sortie de fabrication.

De préférence, le profil est tel que toute paire d'arcs de cercle adjacents parmi les arcs de cercle est constituée d'arcs de cercle ayant des rayons de courbure différents, finis ou infinis, et des tangentes confondues au point d'intersection. On évite ainsi les ruptures de pentes du chemin de came, et les chocs que celles-ci pourraient générer.

De préférence, le profil est constitué par la pluralité d'arc de cercles.

De préférence la pluralité d'arcs de cercle est constituée d'au plus dix arcs de cercle. Un trop grand nombre d'arcs de cercle rend les contrôles de conformité trop complexes. En pratique, on obtient des résultats satisfaisants, suivant les applications, avec un profil de chemin de roulement constitué de trois, quatre, cinq, six, sept, huit, neuf ou dix arcs de cercle.

De préférence, la pluralité d'arcs de cercle comporte au moins trois arcs de cercle. Un nombre trop faible d'arcs de cercle n'offre pas la liberté nécessaire pour des applications exigeantes.

Suivant un mode de réalisation, au moins un arc de cercle du profil a un arc de cercle adjacent du côté de l'extrémité directe du chemin de came parmi les arcs de cercle du profil et un arc de cercle adjacent du côté de l'extrémité rétrograde du chemin de came parmi les arcs de cercle du profil, et présente un rayon supérieur au rayon de l'arc de cercle adjacent du côté de l'extrémité directe du chemin de came et au rayon de l'arc de cercle adjacent du côté de l'extrémité rétrograde du chemin de came. Dans le cas d'un chemin de came convexe, par exemple, cette configuration se traduit par le fait que la raideur angulaire du mécanisme de filtration passe par un maximum relatif dans la plage de débattement angulaire entre les deux organes tournants qui correspond à un contact entre le suiveur de came et l'arc de cercle de rayon de courbure plus important que les arcs de cercle adjacents.

Suivant un mode de réalisation, au moins un arc de cercle du profil a un arc de cercle adjacent du côté de l'extrémité directe du chemin de came parmi les arcs de cercle du profil et un arc de cercle adjacent du côté de l'extrémité rétrograde du chemin de came parmi les arcs de cercle du profil, et présente un rayon inférieur au rayon de l'arc de cercle adjacent du côté de l'extrémité directe du chemin de came et au rayon de l'arc de cercle adjacent du côté de l'extrémité rétrograde du chemin de came. Dans le cas d'un chemin de came convexe, par exemple, cette configuration se traduit par le fait que la raideur angulaire du mécanisme de filtration passe par un minimum relatif dans la plage de débattement angulaire entre les deux organes tournants qui correspond à un contact entre le suiveur de came et l'arc de cercle de rayon de courbure moins important que les arcs de cercle adjacents. Le cas échéant, le chemin de came peut combiner un ou plusieurs maximums relatifs et un ou plusieurs minimums relatifs.

De manière préférentielle, le chemin de came est tourné radialement dans une direction d'appui sur le suiveur de came. Le suiveur de came définit un cercle primitif de contact avec le chemin de came centré sur l'arc de révolution. Dans au moins une position de référence du mécanisme de filtration, le profil est en tout point à une distance positive ou nulle du cercle primitif, mesurée dans la direction d'appui. Ceci permet d'assurer, dans le cas d'un suiveur de came restant à distance fixe de l'axe de révolution, qu'il y a toujours contact entre le suiveur de came et le chemin de came. Dans la position de référence, le suiveur de came est de préférence en appui sur un arc de cercle dit de référence du profil, en un point de contact, dit de référence, la normale à l'arc de cercle de référence au point de contact de référence coupant l'axe de révolution. La position de référence est ainsi une position d'équilibre, où le moment des forces de contact entre suiveur de came et chemin de came par rapport à l'axe de révolution est nul.

Suivant un mode de réalisation particulièrement intéressant, le profil est tel que lorsque le mécanisme de filtration est dans la position de référence, au moins un des arcs de cercle du profil se rapproche du cercle primitif en s'éloignant du point de contact de référence. Ce rapprochement du cercle primitif correspond à une raideur angulaire négative.

De préférence, le profil comporte au moins deux arcs de cercle directement adjacents à l'arc de cercle de référence, de part et d'autre de l'arc de cercle de référence. Des oscillations de part et d'autre de la position de référence sont donc possibles.

Suivant un mode de réalisation, le chemin de came est tourné radialement vers l'extérieur et le suiveur came est situé radialement à l'extérieur du chemin de came. Cette disposition est avantageuse du point de vue de l'encombrement radial. Elle permet de plus une reprise par le suiveur de came des efforts centrifuges radiaux subis par le chemin de came. Dans cette hypothèse, on prévoit de manière préférentielle que l'arc de cercle de référence a un rayon fini ou infini, strictement supérieur au rayon du cercle primitif. Avantageusement, le profil comporte un arc de cercle (A1) directement adjacent au cercle de référence et ayant un rayon strictement inférieur au rayon du cercle de référence. De préférence, les deux arcs de cercles directement adjacents à l'arc de cercle de référence de part et d'autre de l'arc de cercle de référence ont chacun un rayon fini, strictement inférieur au rayon de l'arc de cercle de référence. L'arc de cercle de référence correspond à une partie du chemin de came avec un bras de levier qui diminue jusqu'à devenir nul au point de référence aussi bien dans le sens direct que dans le sens rétrograde. Le point de référence définit donc une position d'équilibre stable du mécanisme de filtration.

Suivant un autre mode de réalisation, le chemin de came est tourné radialement vers l'intérieur et le suiveur came est situé radialement à l'intérieur du chemin de came.

De préférence, le suiveur de came comporte un galet suiveur.

Suivant un mode de réalisation de structure particulièrement simple et fiable, le chemin de came est formé sur une lame flexible comportant un pied fixé à l'organe tournant portant le chemin de came. Il est toutefois également envisageable de prévoir une came reliée par un ressort rapporté à l'organe tournant portant le chemin de came.

Suivant un mode de réalisation, le mécanisme de filtration de torsion comporte en outre:
- au moins un autre chemin de came porté par l'un des premier et deuxième organes tournants, l'autre chemin de came étant fixe en rotation autour de l'axe de révolution par rapport à l'organe tournant portant l'autre chemin de came et lié élastiquement à l'organe tournant portant l'autre chemin de came de manière à présenter un degré de liberté de mouvement par rapport à l'organe tournant portant l'autre chemin de came, et
- au moins un autre suiveur de came associé à l'autre chemin de came et porté par l'autre des premier et deuxième organes tournants, l'autre suiveur de came parcourant l'autre chemin de came en provoquant un déplacement variable de l'autre chemin de came par rapport à l'organe tournant portant l'autre chemin de came,

L'autre chemin de came présente, dans un plan de coupe perpendiculaire à l'axe de révolution, un profil constitué d'une pluralité d'arcs de cercle deux à deux adjacents, le profil étant tel que deux arcs de cercle adjacents quelconques parmi les arcs de cercle ont des rayons de courbure différents et un point d'intersection, et ont des tangentes confondues au point d'intersection.

De préférence, les deux chemins de came sont portés par le même organe tournant pour un meilleur équilibre des composantes radiales des efforts exercés sur les chemins de came et sur les suiveurs de came. La disposition des chemins de came et des suiveurs de came peut être symétrique par rapport à l'axe de révolution, ce qui permet un équilibrage naturel des masses en rotation. On peut également envisager un mécanisme de filtration à plus de deux chemins de came, par exemple à trois ou quatre chemins de came. On peut envisager que certains chemins de came, par exemples deux chemins de came identiques opposés, soient portés par l'un des organes tournants. et que certains autres chemins de came, par exemple deux autres chemins de came identiques opposés, soit fixés à l'autre organe tournant.

De manière particulièrement avantageuse, on peut envisager de prévoir le chemin de came et l'autre chemin de came ont des profils différents. On peut notamment choisir un profil de chemin de came à rayons croissants pour l'un des chemins de came et à rayons décroissants pour l'autre, ce qui peut permettre avec une grande maîtrise de constituer une plage importante de débattement angulaire dans laquelle la raideur angulaire est pratiquement nulle. On peut également ainsi transmettre des couples élevés avec une raideur maîtrisée constante.

De préférence, le profil du chemin de came et le profil de l'autre chemin de came sont tels que dans une plage angulaire d'oscillation donnée d'amplitude supérieure à 20°, et de préférence supérieure à 30°, et de préférence supérieure à 40°, du deuxième organe tournant par rapport au premier organe tournant, le mécanisme de filtration de torsion présente une raideur angulaire de valeur absolue inférieure à 180Nm/rad, de préférence inférieure à 120Nm/rad, par exemple inférieure à 60 Nm/rad. Plus cette plage de débattement angulaire est importante, plus la capacité du mécanisme de filtration à filtrer les fortes fluctuations de couple, pour des couples restants faibles en valeur absolue, est importante.

Suivant un mode de réalisation, dans une plage angulaire d'oscillation donnée du deuxième organe tournant par rapport au premier organe tournant, et dans un sens donné d'oscillation, l'interaction entre le chemin de came et le suiveur de came produit un couple sur le premier organe tournant dans une direction donnée, et l'interaction entre l'autre chemin de came et l'autre suiveur de came produit un autre couple sur le premier organe tournant dans la direction opposée à la direction donnée. Dans cette plage angulaire, le couple résultant peut être nul ou très faible.

De façon particulièrement avantageuse, le profil du chemin de came et le profil de l'autre chemin de came sont tels que dans une plage angulaire d'oscillation donnée d'amplitude supérieure à 10° du deuxième organe tournant par rapport au premier organe tournant, le mécanisme présente une raideur angulaire de valeur absolue supérieure à 750 Nm/rad, de préférence supérieure à 800 Nm/rad, de préférence supérieure à 850 Nm/rad. Cette raideur importante sur une plage angulaire suffisante permet au mécanisme de filtration d'accepter des couples élevés.

De préférence, il existe au moins une position angulaire d'oscillation du deuxième organe tournant correspondant à un contact entre le suiveur de came et un des points d'intersection de deux arcs de cercle d'un des profils de came et qui ne correspond pas à un contact entre l'autre suiveur de came et un des points d'intersection de deux arcs de cercle du profil de l'autre chemin de came. On peut ainsi multiplier les positions angulaires correspondant à un passage d'un des suiveurs de came d'un arc de cercle à un autre, et affiner ainsi la caractéristique de réponse du mécanisme de filtration, tout en conservant des profils de came simples, c'est-à-dire constitués chacun d'un nombre restreint d'arcs de cercle.

De préférence, l'autre chemin de came est tourné radialement dans une direction d'appui sur l'autre suiveur de came, en ce que l'autre suiveur de came définit un cercle primitif de contact avec l'autre chemin de came centré sur l'arc de révolution et en ce que, dans la position de référence du mécanisme de filtration, le profil de l'autre chemin de came est en tout point à une distance positive ou nulle de le cercle primitif de contact défini par l'autre suiveur de came, mesurée dans la direction d'appui sur l'autre suiveur de came, et en ce que dans la position de référence, l'autre suiveur de came est en appui sur un arc de cercle dit de référence du profil de l'autre chemin de came, en un point de contact, dit de référence, la normale à l'arc de cercle de référence du profil de l'autre chemin de came au point de contact de référence sur l'arc de cercle de référence du profil de l'autre chemin de came coupant l'axe de révolution.

De préférence, l'autre chemin de came est également tourné radialement vers l'extérieur et l'autre suiveur came est situé radialement à l'extérieur de l'autre chemin de came. Cette disposition est avantageuse du point de vue de l'encombrement radial. Elle permet de plus une reprise par le suiveur de came des efforts centrifuges radiaux subis par le chemin de came.

Suivant un autre mode de réalisation, l'autre chemin de came est également tourné radialement vers l'intérieur et l'autre suiveur came est situé radialement à l'intérieur de l'autre chemin de came.

Suivant un mode de réalisation de structure particulièrement simple et fiable, l'autre chemin de came est formé sur une lame flexible comportant un pied fixé à l'organe tournant portant l'autre chemin de came. Il est toutefois également envisageable de prévoir une came reliée par un ressort rapporté à l'organe tournant portant le chemin de came.

Suivant un mode de réalisation, le profil de l'autre chemin de came comporte une pluralité d'autres arcs de cercle deux à deux adjacents et ayant deux à deux un point d'intersection, le profil de l'autre chemin de came étant tel qu'au moins deux arcs de cercle adjacents parmi les autres arcs de cercle ont des rayons de courbure différents, finis ou infinis, et des tangentes confondues au point d'intersection. De préférence, la pluralité d'autres arcs de cercle est constituée d'au moins trois et/ou d'au plus dix autres arcs de cercle.

Le mécanisme de filtration selon l'invention a vocation, suivant un aspect de l'invention, à transmettre un couple entre un organe menant relié à l'un des premier et deuxième organes tournants et un organe mené relié à l'autre des premier et deuxième organes tournants. Ainsi, l'invention a également trait à une chaîne cinématique de transmission de couple constituant un chemin de couple entre un organe menant et un organe mené, caractérisée en ce qu'elle comporte un mécanisme de filtration tel que décrit précédemment, le premier et le deuxième organes tournants se trouvant dans le chemin de couple entre l'organe menant et l'organe mené.

Ainsi, en particulier, l'invention a trait à un double volant amortisseur comportant un volant primaire et un volant secondaire, le double volant amortisseur intégrant un mécanisme de filtration de torsion tel que décrit précédemment, le volant primaire étant constitué par le premier organe tournant et le volant secondaire par le deuxième organe tournant. Dans cette hypothèse, le volant secondaire est destiné à, et agencé pour, être relié à un organe mené, par exemple un plateau d'embrayage à friction.

De façon analogue, l'invention vise également un amortisseur à longue course intégrant le mécanisme de filtration de torsion selon l'invention.

Le mécanisme de filtration selon l'invention a également vocation, suivant un autre aspect de l'invention, à être intégré à un batteur inertiel ou un oscillateur pendulaire disposé en dérivation par rapport au chemin de couple entre un organe menant et un organe mené. Ainsi, en particulier, l'invention a également trait à un mécanisme d'amortissement comportant un organe d'entrée et un organe de sortie reliés par une chaîne cinématique de transmission de couple, comportant un mécanisme de filtration tel que décrit précédemment, dont le premier organe tournant est constitué par l'organe d'entrée, l'organe de sortie ou un élément de la chaîne cinématique de transmission entre l'organe d'entrée et l'organe de sortie, le deuxième organe tournant étant disposé en dérivation par rapport à la chaîne cinématique de transmission de couple. Elle a également trait à une chaîne cinématique de transmission de couple constituant un chemin de couple entre un organe menant et un organe mené, caractérisée en ce qu'elle comporte un mécanisme de filtration tel que décrit précédemment, l'un des premier et deuxième organes tournants se trouvant dans le chemin de couple entre l'organe menant et l'organe mené, l'autre des premier et deuxième organes tournants étant hors du chemin de couple entre l'organe menant et l'organe mené.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique d'un ensemble de propulsion selon un mode de réalisation de l'invention, comportant un double volant amortisseur intégrant un mécanisme de filtration de torsion selon un mode de réalisation de l'invention;
- la figure 2, une vue en perspective d'une partie du double volant amortisseur de l'ensemble de propulsion de la figure 1;
- la figure 3, une vue de face d'une partie du double volant amortisseur de la figure 2, permettant notamment de visualiser une lame flexible du mécanisme de filtration;
- la figure 4, une vue en coupe du double volant amortisseur de la figure 2;
- la figure 5, une vue schématique d'un profil d'un chemin de came de la lame flexible de la figure 3;
- la figure 6, un graphe d'une courbe caractéristique du couple du mécanisme de filtration, correspondant au profil de la figure 5;
- la figure 7, une vue schématique d'un profil alternatif au profil de la figure 5;
- la figure 8, un graphe d'une courbe caractéristique du couple du mécanisme de filtration, correspondant au profil de la figure 7;
- la figure 9, un graphe d'une courbe caractéristique du couple du mécanisme de filtration, correspondant à un autre profil de chemin de came;
- la figure 10, un graphe d'une courbe résultant de la combinaison des caractéristiques de couple illustrées sur les figures 6 et 8.

Pour plus de clarté, les éléments identiques ou similaires sont repérés par des signes de référence identiques sur l'ensemble des figures.

### DESCRIPTION DÉTAILLÉE DE MODES DE REALISATION

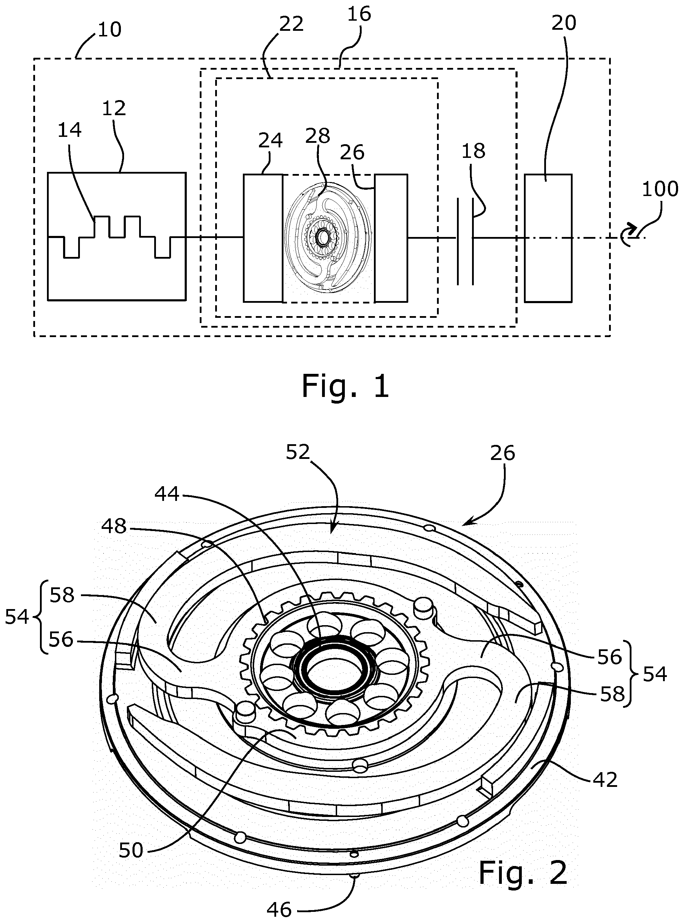

Sur la figure **1** est illustré un ensemble de propulsion **10** de véhicule automobile comportant un moteur à combustion interne **12** dont le vilebrequin **14** entraîne une chaîne cinématique de transmission **16** comportant un embrayage sec **18** situé en amont d'un arbre d'entrée **20** de boîte de transmission. Cinématiquement entre le vilebrequin **14** et l'embrayage **18** à friction dans la chaîne cinématique de transmission **16** est disposé un mécanisme de filtration de torsion **22** constituant un double volant amortisseur et comportant un organe d'entrée constitué par un volant primaire **24** solidaire du vilebrequin **14** et un organe de sortie constitué par un volant secondaire **26** solidaire d'un plateau de réaction de l'embrayage **18** ou ne faisant qu'une pièce avec celui-ci. Des organes élastiques **28** sont interposés entre le volant primaire **24** et le volant secondaire **26** de manière à travailler lors de fluctuations de positionnement angulaire entre volant primaire **24** et volant secondaire **26.** Le vilebrequin **14,** le mécanisme d'amortissement **22,** l'embrayage **18** et l'arbre d'entrée **20** de la boîte de transmission tournent autour d'un même axe de révolution **100.**

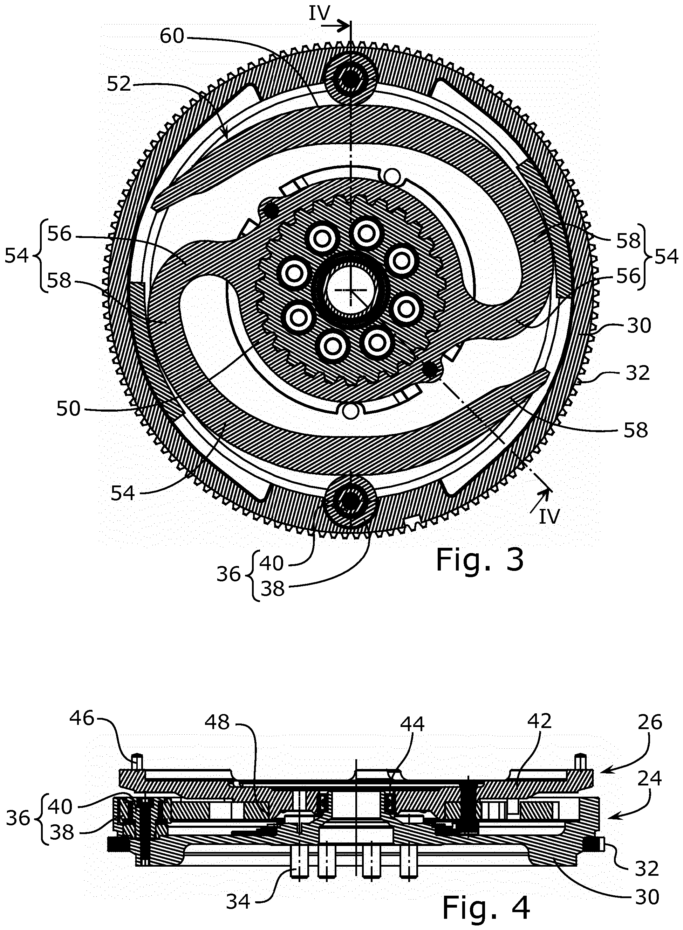

La structure du double volant amortisseur **22** est illustrée en détail sur les figures **2** à **4****.** Le volant primaire **24** est composé d'un plateau **30** sur lequel est fixée une couronne dentée **32** de liaison à un démarreur (non représenté). Le plateau **30** du volant primaire **24** est destiné à être monté par des vis **34** sur un flasque d'extrémité du vilebrequin **14.** Le volant primaire **24** supporte des suiveurs de cames **36,** ici au nombre de deux. Chaque suiveur de came **36** est constitué par un galet **38** monté par l'intermédiaire d'un roulement à aiguilles ou d'un palier lisse sur un pivot **40** fixé au plateau **30,** de manière à tourner autour d'un axe parallèle à l'axe de révolution **100** et fixe par rapport au volant primaire **24.**

Le volant secondaire **26** forme un plateau massif **42** qui constitue également un plateau de réaction de l'embrayage **18** à friction. Un palier à roulement **44** assure le guidage en rotation du volant secondaire **26** par rapport au volant primaire **24.** Des plots **46** permettent la fixation du plateau **42** à un couvercle d'embrayage (non représenté). Le volant secondaire **26** forme en outre un moyeu cannelé **48** qui fait saillie axialement par rapport au plateau **42,** et sur lequel est fretté le corps annulaire **50** d'un organe élastique monobloc **52** comportant des lames flexibles courbes **54,** ici au nombre de deux. Chaque lame flexible **54** présente un pied coudé **56** s'étendant sensiblement radialement vers l'extérieur par rapport au corps annulaire **50,** prolongé par un bras courbe allongé **58** s'étendant circonférentiellement et sur lequel est formé un chemin de came **60** tourné radialement vers l'extérieur et situé radialement à l'intérieur et en regard de l'un des galets **38.** Chaque lame flexible **54** est ainsi associée à l'un des galets **38** qui roule sur le chemin de came associé **60.**

De façon remarquable, le chemin de came **60** présente, dans un plan de coupe perpendiculaire à l'axe de révolution **100**, un profil constitué d'une succession d'arcs de cercle, dont certains peuvent avoir un rayon infini et constituer des segments de droite.

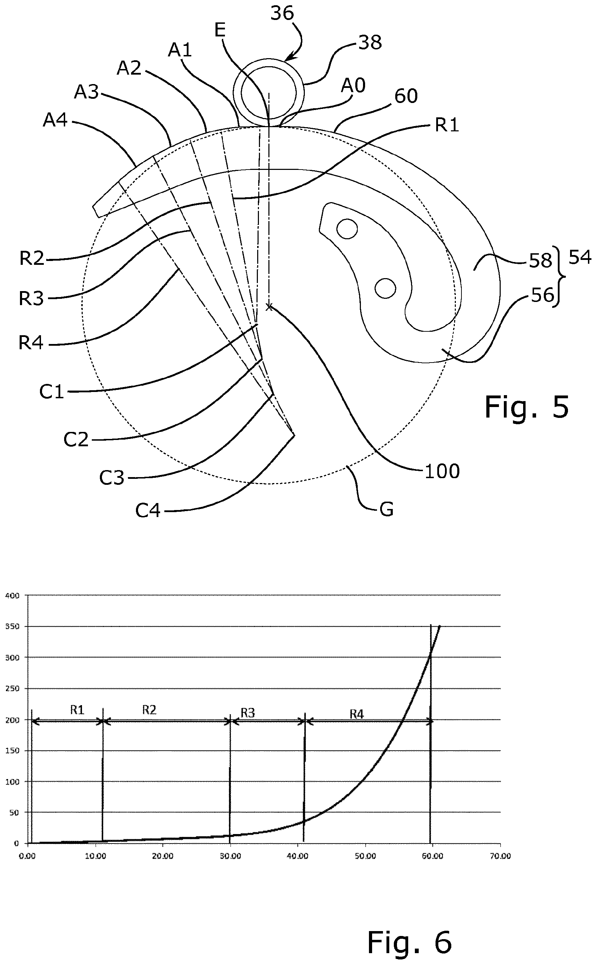

Par exemple, suivant le mode de réalisation illustré sur la figure **5****,** le profil est constitué d'un segment de droite **A0** (arc de cercle de rayon infini), suivi successivement de quatre arcs de cercle **A1, A2, A3** et **A4,** ayant des centres **C1, C2, C3, C4** et des rayons **R1, R2, R3, R4** deux à deux différents, et ici deux à deux croissants, de sorte que **R1<R2<R3<R4.** À leur point d'intersection, deux arcs de cercle adjacents ont une tangente commune. L'arc de cercle **A1** est également tangent au segment de droite **A0.** De manière remarquable, il existe un point de référence **E** du segment de droite **A0** pour lequel la normale au segment de droite passe par l'axe de révolution **100** du mécanisme de filtration. En ce point de référence **E,** l'effort de contact entre la lame flexible **54** et le suiveur de came **36** est purement radial par rapport à l'axe de révolution **100,** et n'engendre aucun couple. Il s'agit donc d'une position d'équilibre. Cette position d'équilibre est stable, puisque de part et d'autre du point de référence **E,** le chemin de came **60** se trouve radialement à l'extérieur du cercle primitif **G** défini par la trace du point de contact entre le galet **38** du suiveur de came **36** et le chemin de came **60** lorsque le premier organe tournant **24** tourne par rapport au deuxième **26.**

Le chemin de came **60** de la figure **5** est convexe, et les arcs de cercle **A0** à **A4** sont ici tous situés, par rapport à l'axe de révolution, radialement à l'extérieur du cercle primitif **G,** au moins dans la position de référence correspondant au contact entre le galet **38** et le point de référence **E.** Les centres de courbure et les rayons des arcs de cercle successifs sont choisis de manière à ce que, dans la position de référence correspondant au contact entre le galet **38** et le point de référence **E,** la distance entre l'axe de révolution et un point courant du chemin de came augmente continument lorsque ce point s'éloigne du point de référence.

On s'assure ainsi que lorsque le volant primaire tourne par rapport au volant secondaire dans un sens que l'on nommera arbitrairement "sens direct", le galet du suiveur de came roule sur le chemin de came associé en s'éloignant du point de référence E et en se rapprochant de l'extrémité libre et en imposant une flexion croissante de la lame flexible.

Il en découle une relation entre le couple et la position angulaire illustrée par le graphe de la figure **6****,** où l'axe des abscisses représente les valeurs de position angulaire croissante dans le sens direct à partir de la position du point de référence **E** et l'axe des ordonnées les valeurs absolues du couple statique correspondant. On observe que le couple est une fonction continue monotone croissante de la position angulaire. En d'autres termes, le couple augmente continument et sans discontinuité avec la position angulaire. On observe également que la dérivée de la fonction précédente est une fonction monotone continue croissante, en d'autres termes que la raideur angulaire augmente également continûment avec la position angulaire.

Le cas échéant, le chemin de came peut se prolonger en sens rétrograde au-delà du segment **A0.** Dans ce cas, ce qui a été décrit ici pour la portion du chemin de came parcourue par le suiveur de came lorsque le volant primaire tourne par rapport au volant secondaire en sens direct à partir du point de référence **E** vaut également pour la partie du chemin de came parcourue par le suiveur de came à partir du point d'équilibre lorsque le volant primaire tourne par rapport au volant secondaire en sens rétrograde. Dans cette portion également, le chemin de came est constitué d'arc de cercles successifs, cotangents à leurs points d'intersection.

Il s'avère donc possible de construire une surface de came simple qui détermine une loi de variation de la raideur angulaire avec le positionnement angulaire entre volant primaire et volant secondaire. Cette construction par arcs de cercle successifs facilite notamment les contrôles de cotes dans le processus de fabrication.

Naturellement, on peut choisir les rayons successifs des arcs de cercle pour obtenir différents profils de cames et différentes variations du couple et de la raideur angulaire.

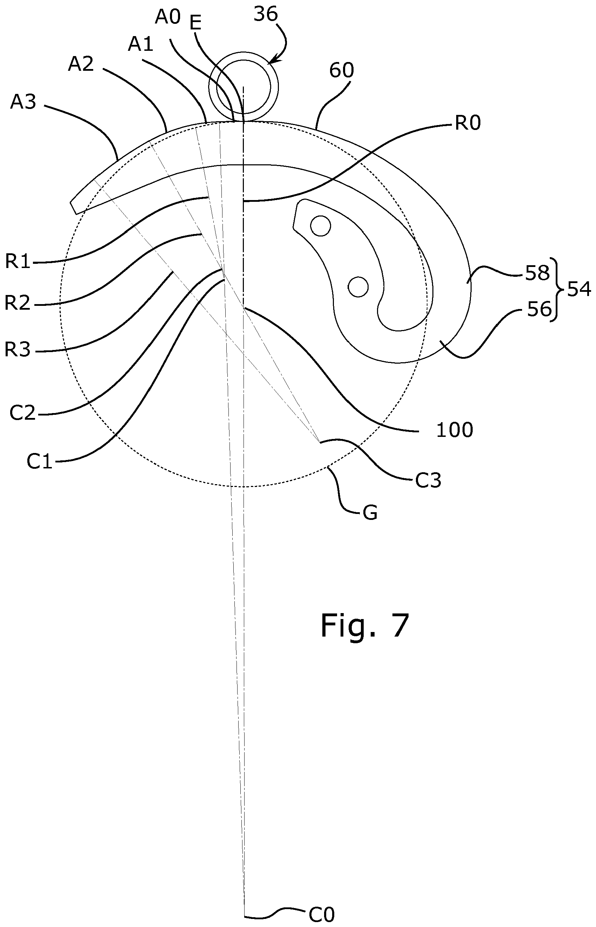

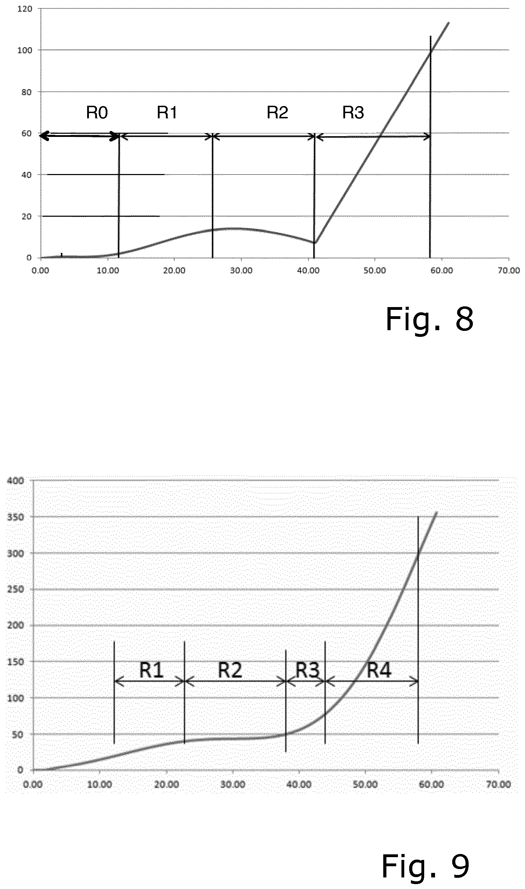

Ainsi, on a illustré sur la figure **7** un profil à quatre arcs de cercle successifs de rayons **R0, R1, R2** et **R3,** tels que **R0>R, R0>>R1, R1>R2, R2<<R3, R, R** étant le rayon du cercle primitif **G,** les arcs directement adjacents étant cotangents à leur intersection, comme dans le premier mode de réalisation. Il découle d'un profil de ce type une relation entre couple et débattement angulaire telle qu'illustrée sur la figure **8****:** le couple est une fonction continue du débattement angulaire, mais une fonction non monotone et seulement dérivable par morceaux. On observe notamment que l'arc de cercle **A2** de rayon **R2** correspond à une pente négative de la courbe, donc à une raideur angulaire négative. Ceci correspond à une zone du profil du chemin de came qui se rapproche du cercle primitif en sens direct.

Sur la figure **9****,** on a illustré la courbe de variation du couple en fonction du débattement angulaire pour un profil différent, avec **R0>RP, R1<R0, R2<R1, R3>R2** et **R4>R3,** mais avec des longueurs d'arc de cercle différentes du mode de réalisation précédent, de sorte que la raideur angulaire reste en tout point positive ou nulle.

On comprend que quelle que soit la forme du chemin de came **60** et le positionnement du suiveur de came **36** sur le chemin de came **60,** la lame flexible **54** est fléchie de manière que le point de contact entre le suiveur de came **36** et le chemin de came **60** soit sur le cercle primitif **G.** Le chemin de came **60** étant tourné radialement vers l'extérieur, le raideur dans un sens de rotation donné au point de contact sera négative si la partie du chemin de came **60** qui va être parcourue à partir du point de contact dans ce sens de rotation est située, lorsque le suiveur de came **36** est au point de contact, en-dessous du cercle primitif **G.** Inversement, la raideur est positive si la partie du chemin de came **60** au voisinage du point de contact et qui va être parcourue à partir du point de contact dans ce sens de rotation, est située, lorsque le suiveur de came **36** est au point de contact, au-dessus du cercle primitif **G.**

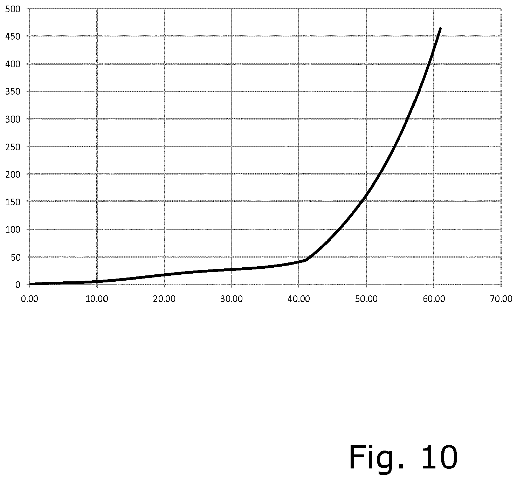

De manière particulièrement avantageuse, on peut combiner, pour un même mécanisme de filtration de torsion, deux lames de profils différents, par exemple une lame du type des figures **5** et **6** et une lame du type des figures **7** et **8****.** Une telle combinaison permet d'obtenir un couple résultant qui est la somme des couples de chaque lame et dont le graphe est illustré sur la figure **10****.** Il est à souligner que l'on a positionné les deux lames des figures 5 et 7 de telle manière qu'elles soient conjointement dans leur position de référence par rapport à leur suiveur de came respectif.

On constate que l'allure générale de la courbe de la figure **10** est similaire à celle de la figure **9****,** mais que les valeurs maximales de couple obtenu, pour le débattement angulaire maximal de 60°, sont substantiellement plus élevées pour le mécanisme à lames de profils différents de la figure **10** que pour le mécanisme à lames identiques de la figure **9****.**

On constate que la tangente à la courbe de la figure **10****,** qui représente la raideur, est faible dans la plage de déflexion angulaire de 20° à 40°, et plus élevée dans la plage de 40° à 60°. Plus précisément, on constate que dans la plage entre 20° à 40°, la raideur angulaire est inférieure à 60 Nm/rad. Dans la plage de débattement angulaire située entre 50° et 60° au contraire, la raideur angulaire est supérieure à 800 Nm/rad, ce qui permet au mécanisme de filtration de répondre à une large plage de couple, entre 0 et 450 Nm, avec une raideur faible sur une partie importante de la plage de débattement angulaire, pour des couples inférieurs à 50 Nm.

Cette résultante est obtenue notamment en combinant sur une plage angulaire donnée (entre 30° et 40°) une raideur positive pour la lame de la figure 5 et négative pour la lame de la figure 7, d'où une valeur résultante quasi nulle de la raideur angulaire dans cette plage de débattement angulaire.

Il s'avère donc possible de construire une caractéristique particulièrement intéressante avec des profils de came qui, individuellement, restent simples. Cette construction de chaque profil de came par arcs de cercle successifs facilite notamment les contrôles de cotes dans le processus de fabrication.

Naturellement, les exemples représentés sur les figures et discutés ci-dessus ne sont donnés qu'à titre illustratif et non limitatif.

Dans les modes de réalisation précédents, le chemin de came **60** est convexe et disposé radialement à l'intérieur du suiveur de came **36,** dans un repère centré sur l'axe de révolution **100.** La solution proposée se laisse toutefois transposer à un chemin de came concave situé radialement à l'intérieur du suiveur de came, tel qu'illustré dans la demande FR3000155. Elle est également transposable à un chemin de came concave situé radialement à l'extérieur du suiveur de came, tel qu'illustré dans la demande FR - 1562316 non publiée au jour du dépôt de la présente demande.

Le mécanisme de filtration de torsion à lame(s) flexible(s) selon l'invention peut constituer un double volant amortisseur comme illustré sur la figure **1****.** Il peut également constituer un batteur inertiel ou un oscillateur pendulaire disposé en dérivation par rapport au chemin de couple.

Il est explicitement prévu que l'on puisse combiner entre eux les différents modes de réalisation illustrés pour en proposer d'autres. Toute caractéristique, telle qu'elle se dégage pour un homme du métier à partir de l'ensemble des pièces de la demande, et qui n'a été concrètement exposée qu'en relation avec d'autres caractéristiques déterminées dans un ou plusieurs modes de réalisation, peut être mise en oeuvre, en variante du ou desdits modes de réalisation, sans être combinée à l'ensemble des autres caractéristiques de ce ou ces modes de réalisation, et/ou peut être le cas échéant combinée avec d'autres caractéristiques issues d'un autre mode de réalisation ressortant de l'ensemble des pièces de la demande, pour autant que cela n'a pas été expressément exclu ou que des circonstances techniques ne rendent de telles combinaisons impossibles ou dénuées de sens.

## Revendications

1. Mécanisme de filtration de torsion (22) pour dispositif de transmission de couple (16), notamment pour automobile, en particulier pour un dispositif d'embrayage, le mécanisme de filtration de torsion (22) comportant :
- un premier organe tournant (24) apte à tourner autour d'un axe de révolution (100) du mécanisme de filtration de torsion (22),
- un deuxième organe tournant (26) apte à tourner autour de l'axe de révolution (100) et à osciller par rapport au premier organe tournant (24),
- au moins un chemin de came (60) porté par l'un (24) des premier et deuxième organes tournants, le chemin de came (60) étant apte à tourner autour de l'axe de révolution (100) avec l'organe tournant (24) portant le chemin de came (60) et lié élastiquement à l'organe tournant (24) portant le chemin de came (60) de manière à présenter un degré de liberté de mouvement par rapport à l'organe tournant (24) portant le chemin de came (60) et
- au moins un suiveur de came (36) associé au chemin de came (60) et porté par l'autre (26) des premiers et deuxième organes tournants, le suiveur de came (36) étant apte à parcourir le chemin de came (60) entre une extrémité rétrograde du chemin de came et une extrémité directe du chemin de came, en provoquant un déplacement variable du chemin de came (60) par rapport à l'organe tournant (24) portant le chemin de came (60),
**caractérisé en ce que** le chemin de came (60) présente, dans un plan de coupe perpendiculaire à l'axe de révolution, un profil comportant une pluralité d'arcs de cercle (A0, A1, A2, A3, A4) deux à deux adjacents et ayant deux à deux un point d'intersection, le profil étant tel qu'au moins deux arcs de cercle adjacents parmi les arcs de cercle (A0, A1, A2, A3, A4) ont des rayons de courbure différents, finis ou infinis, et des tangentes confondues au point d'intersection.

2. Mécanisme de filtration de torsion selon la revendication 1, **caractérisé en ce que** le profil est tel que toute paire d'arcs de cercle adjacents parmi les arcs de cercle (A0, A1, A2, A3, A4) est constituée d'arcs de cercle ayant des rayons de courbure différents, finis ou infinis, et des tangentes confondues au point d'intersection.

3. Mécanisme de filtration de torsion selon l'une quelconque des revendications précédentes, **caractérisé en ce que** la pluralité d'arcs de cercle (A0, A1, A2, A3, A4) est constituée d'au plus dix arcs de cercle.

4. Mécanisme de filtration de torsion selon l'une quelconque des revendications précédentes, **caractérisé en ce que** la pluralité d'arcs de cercle (A0, A1, A2, A3, A4) comporte au moins trois arcs de cercle.

5. Mécanisme de filtration de torsion selon la revendication 4, **caractérisé en ce qu'**au moins un arc de cercle du profil a un arc de cercle adjacent du côté de l'extrémité directe du chemin de came parmi les arcs de cercle (A0, A1, A2, A3, A4) du profil et un arc de cercle adjacent du côté de l'extrémité rétrograde du chemin de came parmi les arcs de cercle (A0, A1, A2, A3, A4) du profil, et présente un rayon supérieur au rayon de l'arc de cercle adjacent du côté de l'extrémité directe du chemin de came et au rayon de l'arc de cercle adjacent du côté de l'extrémité rétrograde du chemin de came.

6. Mécanisme de filtration de torsion selon l'une quelconque des revendications 4 ou 5, **caractérisé en ce qu'**au moins un arc de cercle du profil a un arc de cercle adjacent du côté de l'extrémité directe du chemin de came parmi les arcs de cercle (A0, A1, A2, A3, A4) du profil et un arc de cercle adjacent du côté de l'extrémité rétrograde du chemin de came parmi les arcs de cercle (A0, A1, A2, A3, A4) du profil, et présente un rayon inférieur au rayon de l'arc de cercle adjacent du côté de l'extrémité directe du chemin de came et au rayon de l'arc de cercle adjacent du côté de l'extrémité rétrograde du chemin de came.

7. Mécanisme de filtration de torsion selon l'une quelconque des revendications précédentes, **caractérisé en ce que** le chemin de came (60) est tourné radialement dans une direction d'appui sur le suiveur de came (36), **en ce que** le suiveur de came (36) définit un cercle primitif (G) de contact avec le chemin de came (60) centré sur l'axe de révolution (100) et **en ce que**, dans au moins une position de référence du mécanisme de filtration (22), le profil est en tout point à une distance positive ou nulle du cercle primitif (G), mesurée dans la direction d'appui.

8. Mécanisme de filtration de torsion selon la revendication 7, **caractérisé en ce que** dans la position de référence, le suiveur de came (36) est en appui sur un arc de cercle (A0) dit de référence du profil, en un point de contact, dit de référence (E), la normale à l'arc de cercle de référence (A0) au point de contact de référence (E) coupant l'axe de révolution (100).

9. Mécanisme de filtration selon la revendication 8, **caractérisé en ce que** lorsque le mécanisme de filtration (22) est dans la position de référence, au moins un des arcs de cercle (A0, A1, A2, A3, A4) du profil se rapproche du cercle primitif (G) en s'éloignant du point de contact de référence.

10. Mécanisme de filtration de torsion selon l'une quelconque des revendications précédentes, **caractérisé en ce que** le chemin de came (60) est tourné radialement vers l'extérieur et le suiveur came (36) est situé radialement à l'extérieur du chemin de came (60).

11. Mécanisme de filtration de torsion selon l'une quelconque des revendications 8 à 9 et la revendication 10, **caractérisé en ce que** l'arc de cercle de référence (A0) a un rayon fini ou infini, strictement supérieur au rayon du cercle primitif (G).

12. Mécanisme de filtration de torsion selon l'une quelconque des revendications précédentes, **caractérisé en ce que** le suiveur de came (36) comporte un galet suiveur (38).

13. Mécanisme de filtration de torsion selon l'une quelconque des revendications précédentes, **caractérisé en ce que** le chemin de came (36) est formé sur une lame flexible (54) comportant un pied (56) fixé à l'organe tournant (24) portant le chemin de came (60).

14. Mécanisme de filtration de torsion selon l'une quelconque des revendications précédentes, **caractérisé en ce qu'**il comporte en outre:
- au moins un autre chemin de came (60) porté par l'un (24) des premier et deuxième organes tournants, l'autre chemin de came (60) étant apte à tourner autour de l'axe de révolution (100) avec l'organe tournant portant l'autre chemin de came et lié élastiquement à l'organe tournant portant l'autre chemin de came (60) de manière à présenter un degré de liberté de mouvement par rapport à l'organe tournant portant l'autre chemin de came (60), et
- au moins un autre suiveur de came (36) associé à l'autre chemin de came (60) et porté par l'autre (26) des premier et deuxième organes tournants, l'autre suiveur de came (36) parcourant l'autre chemin de came (60) en provoquant un déplacement variable de l'autre chemin de came (60) par rapport à l'organe tournant portant l'autre chemin de came,
**caractérisé en ce que** l'autre chemin de came présente, dans un plan de coupe perpendiculaire à l'axe de révolution, un profil constitué d'une pluralité d'arcs de cercle (A0, A1, A2, A3, A4) deux à deux adjacents, le profil étant tel que deux arcs de cercle adjacents quelconques parmi les arcs de cercle (A0, A1, A2, A3, A4) ont des rayons de courbure différents et un point d'intersection, et ont des tangentes confondues au point d'intersection.

15. Mécanisme de filtration de torsion selon la revendication 14, **caractérisé en ce que** le chemin de came (60) et l'autre chemin de came (60) ont des profils différents.

## Patentansprüche

1. Torsionsdämpfer (22) für Momentübertragungsvorrichtung (16), insbesondere für ein Kraftfahrzeug, insbesondere für eine Kupplungsvorrichtung, wobei der Torsionsdämpfer (22) Folgendes umfasst:
- ein erstes Drehelement (24), das geeignet ist, um um eine Drehachse (100) des Torsionsdämpfers (22) zu drehen,
- ein zweites Drehelement (26), das geeignet ist, um um die Drehachse (100) zu drehen und in Bezug zu dem ersten Drehorgan (24) zu schwingen,
- mindestens eine Steuerkurve (60), die von dem einen (24) des ersten und zweiten Drehelements getragen wird, wobei die Steuerkurve (60) angepasst ist, um um die Drehachse (100) mit dem Drehelement (24), das die Steuerkurve (60) trägt, zu drehen und federnd mit dem Drehorgan (24), das die Steuerkurve (60) trägt, derart verbunden ist, dass sie einen Bewegungsfreiheitsgrad in Bezug auf das Drehorgan (24), das die Steuerkurve (60) trägt, aufweist, und
- mindestens einen Nockenfolger (36), der mit der Steuerkurve (60) assoziiert ist und von dem anderen (26) des ersten und zweiten Drehelements getragen wird, wobei der Nockenfolger (36) geeignet ist, um die Steuerkurve (60) zwischen einem rückläufigen Ende der Steuerkurve und einem direkten Ende der Steuerkurve zu durchlaufen, indem eine variable Verschiebung der Steuerkurve (60) in Bezug auf das Drehelement (24), das die Steuerkurve (60) trägt, ausgelöst wird,
**dadurch gekennzeichnet, dass** die Steuerkurve (60) in einer Schnittebene senkrecht zu der Drehachse ein Profil aufweist, das eine Vielzahl von Kreisbögen (A0, A1, A2, A3, A4), die zu je zwei nebeneinander liegen und zu je zwei einen Schnittpunkt haben, umfasst, wobei das Profil derart ist, dass mindestens zwei nebeneinanderliegende Kreisbögen der Kreisbögen (A0, A1, A2, A3, A4) unterschiedliche, endliche oder unendliche Krümmungsradien und Tangenten, die an dem Schnittpunkt zusammenfallen, haben.

2. Torsionsdämpfer nach Anspruch 1, **dadurch gekennzeichnet, dass** das Profil derart ist, dass jedes Paar nebeneinanderliegender Kreisbögen der Kreisbögen (A0, A1, A2, A3, A4) aus Kreisbögen gebildet ist, die unterschiedliche, endliche oder unendliche Krümmungsradien und Tangenten, die an dem Schnittpunkt zusammenfallen, haben.

3. Torsionsdämpfer nach einem der vorhergehenden Ansprüche, **dadurch gekennzeichnet, dass** die Vielzahl von Kreisbögen (A0, A1, A2, A3, A4) aus mindestens zehn Kreisbögen besteht.

4. Torsionsdämpfer nach einem der vorhergehenden Ansprüche, **dadurch gekennzeichnet, dass** die Vielzahl von Kreisbögen (A0, A1, A2, A3, A4) mindestens drei Kreisbögen umfasst.

5. Torsionsdämpfer nach Anspruch 4, **dadurch gekennzeichnet, dass** mindestens ein Kreisbogen des Profils einen Kreisbogen benachbart zu der direkten Endseite der Steuerkurve der Kreisbögen (A0, A1, A2, A3, A4) des Profils und einen Kreisbogen benachbart zu der rückläufigen Endseite der Steuerkurve unter den Kreisbögen (A0, A1, A2, A3, A4) des Profils hat und einen Radius aufweist, der größer ist als der Radius des Kreisbogens benachbart zu der direkten Endseite der Steuerkurve und der Radius des Kreisbogens benachbart zu der rückläufigen Endseite der Steuerkurve.

6. Torsionsdämpfer nach einem der Ansprüche 4 oder 5, **dadurch gekennzeichnet, dass** mindestens ein Kreisbogen des Profils einen Kreisbogen benachbart zu der Seite des direkten Endes der Steuerkurve unter den Kreisbögen (A0, A1, A2, A3, A4) des Profils und einen Kreisbogen benachbart zu der Seite des rückläufigen Endes der Steuerkurve unter den Kreisbögen (A0, A1, A2, A3, A4) des Profils hat und einen Radius aufweist, der kleiner ist als der Radius des Kreisbogens benachbart zu der Seite des direkten Endes der Steuerkurve und der Radius des Kreisbogens benachbart zu der Seite des rückläufigen Endes der Steuerkurve.

7. Torsionsdämpfer nach einem der vorhergehenden Ansprüche, **dadurch gekennzeichnet, dass** die Steuerkurve (60) radial in eine Auflagerichtung auf dem Nockenfolger (36) zeigt, und dass der Nockenfolger (36) einen Teilkreis (G) zur Berührung mit der Steuerkurve (60) definiert, der auf dem Drehachse (100) zentriert ist, und dass in mindestens einer Referenzposition des Torsionsdämpfers (22) das Profil an jeder Stelle an einem Abstand, der positiv oder gleich null ist, von dem Teilkreis (G) in die Auflage Richtung gemessen ist.

8. Torsionsdämpfer nach Anspruch 7, **dadurch gekennzeichnet, dass** der Nockenfolger (36) in der Referenzposition auf einem Kreisbogen (A0), der Referenz des Profils genannt wird, an einem Kontaktpunkt, Referenzkontaktpunkt (E) genannt, aufliegt, wobei die Senkrechte zu dem Referenzkreisbogen (A0) an dem Referenzkontaktpunkt (E) die Drehachse (100) schneidet.

9. Torsionsdämpfer nach Anspruch 8, **dadurch gekennzeichnet, dass**, wenn der Torsionsdämpfer (22) in der Referenzposition ist, sich mindestens einer der Kreisbögen (A0, A1, A2, A3, A4) des Profils dem Teilkreis (G) nähert, während er sich von dem Referenzkontaktpunkt entfernt.

10. Torsionsdämpfer nach einem der vorhergehenden Ansprüche, **dadurch gekennzeichnet, dass** die Steuerkurve (60) radial nach außen zeigt, und dass der Nockenfolger (36) radial außerhalb der Steuerkurve (60) liegt.

11. Torsionsdämpfer nach einem der Ansprüche 8 bis 9 und dem Anspruch 10, **dadurch gekennzeichnet, dass** der Referenzkreisbogen (A0) einen endlichen oder unendlichen Radius hat, der strikt größer ist als der Radius des Teilkreises (G).

12. Torsionsdämpfer nach einem der vorhergehenden Ansprüche, **dadurch gekennzeichnet, dass** der Nockenfolger (36) eine Nockenlaufrolle (38) umfasst.

13. Torsionsdämpfer nach einem der vorhergehenden Ansprüche, **dadurch gekennzeichnet, dass** die Steuerkurve (36) auf einer biegsamen Klinge (54) gebildet ist, die einen Fuß (56) umfasst, der an dem Drehelement (24), das die Steuerkurve (60) trägt, befestigt ist.

14. Torsionsdämpfer nach einem der vorhergehenden Ansprüche, **dadurch gekennzeichnet, dass** er außerdem Folgendes umfasst:
- mindestens eine andere Steuerkurve (60), die von dem einen (24) des ersten und zweiten Drehelements getragen wird, wobei die andere Steuerkurve (60) geeignet ist, um um die Drehachse (100) mit dem Drehelement, das die andere Steuerkurve trägt, zu drehen, und elastisch mit dem Drehelement, das die andere Steuerkurve (60) trägt, derart verbunden ist, dass sie einen Bewegungsfreiheitsgrad in Bezug auf das Drehelement, das die andere Steuerkurve (60) trägt, aufweist, und
- mindestens einen anderen Nockenfolger (36), der mit der anderen Steuerkurve (60) assoziiert ist und von dem anderen (26) des ersten und zweiten Drehelements getragen wird, wobei der andere Nockenfolger (36) die andere Steuerkurve (60) durchläuft, indem eine variable Verschiebung der anderen Steuerkurve (60) in Bezug auf das Drehelement, das die andere Steuerkurve trägt, ausgelöst wird,
**dadurch gekennzeichnet, dass** die andere Steuerkurve in einer Schnittebene senkrecht zu der Drehachse ein Profil aufweist, das aus einer Vielzahl von Kreisbögen (A0, A1, A2, A3, A4), die zu je zwei nebeneinander liegen, besteht, wobei das Profil derart ist, dass zwei beliebige nebeneinanderliegende der Kreisbögen (A0, A1, A2, A3, A4) unterschiedliche Krümmungsradien und eine Schnittstelle und Tangenten, die an der Schnittstelle zusammenfallen, haben.

15. Torsionsdämpfer nach Anspruch 14, **dadurch gekennzeichnet, dass** die Steuerkurve (60) und die andere Steuerkurve (60) unterschiedliche Profile haben.

## Claims

1. Torsion filtration mechanism (22) for a torque transmission device (16), in particular for a motor vehicle, in particular for a clutch device, the torsion filtration mechanism (22) comprising:
- a first rotating member (24) able to rotate about an axis of revolution (100) of the torsion filtration mechanism (22),
- a second rotating member (26) able to rotate about the axis of revolution (100) and to oscillate with respect to the first rotating member (24),
- at least one cam track (60) borne by one (24) of the first and second rotating members, the cam track (60) being able to rotate about the axis of revolution (100) with the rotating member (24) bearing the cam track (60) and coupled elastically to the rotating member (24) bearing the cam track (60) so as to have a degree of freedom of movement with respect to the rotating member (24) bearing the cam track (60), and
- at least one cam follower (36) associated with the cam track (60) and borne by the other (26) of the first and second rotating members, the cam follower (36) being able to travel over the cam track (60) between a backward end of the cam track and a direct end of the cam track while bringing about a variable movement of the cam track (60) with respect to the rotating member (24) bearing the cam track (60),
**characterized in that** the cam track (60) has, in a section plane perpendicular to the axis of revolution, a profile comprising a plurality of circular arcs (A0, A1, A2, A3, A4) adjacent in pairs and having a point of intersection in pairs, the profile being such that at least two adjacent circular arcs among the circular arcs (A0, A1, A2, A3, A4) have different, finite or infinite, radii of curvature and coincident tangents at the point of intersection.

2. Torsion filtration mechanism according to Claim 1, **characterized in that** the profile is such that any pair of adjacent circular arcs among the circular arcs (A0, A1, A2, A3, A4) is constituted by circular arcs having different, finite or infinite, radii of curvature and coincident tangents at the point of intersection.

3. Torsion filtration mechanism according to any one of the preceding claims, **characterized in that** the plurality of circular arcs (A0, A1, A2, A3, A4) is constituted by at most ten circular arcs.

4. Torsion filtration mechanism according to any one of the preceding claims, **characterized in that** the plurality of circular arcs (A0, A1, A2, A3, A4) comprises at least three circular arcs.

5. Torsion filtration mechanism according to Claim 4, **characterized in that** at least one circular arc of the profile has an adjacent circular arc on the direct end side of the cam track among the circular arcs (A0, A1, A2, A3, A4) of the profile and an adjacent circular arc on the backward end side of the cam track among the circular arcs (A0, A1, A2, A3, A4) of the profile, and has a radius which is larger than the radius of the adjacent circular arc on the direct end side of the cam track and larger than the radius of the adjacent circular arc on the backward end side of the cam track.

6. Torsion filtration mechanism according to either one of Claims 4 and 5, **characterized in that** at least one circular arc of the profile has an adjacent circular arc on the direct end side of the cam track among the circular arcs (A0, A1, A2, A3, A4) of the profile and an adjacent circular arc on the backward end side of the cam track among the circular arcs (A0, A1, A2, A3, A4) of the profile, and has a radius which is smaller than the radius of the adjacent circular arc on the direct end side of the cam track and smaller than the radius of the adjacent circular arc on the backward end side of the cam track.

7. Torsion filtration mechanism according to any one of the preceding claims, **characterized in that** the cam track (60) is directed radially in a bearing direction on the cam follower (36), **in that** the cam follower (36) defines a contact pitch circle (G) with the cam track (60) centred on the axis of revolution (100), and **in that**, in at least one reference position of the filtration mechanism (22), the profile is at all points at a positive or zero distance from the pitch circle (G), measured in the bearing direction.

8. Torsion filtration mechanism according to Claim 7, **characterized in that**, in the reference position, the cam follower (36) bears on a circular arc (A0), termed reference circular arc, of the profile, at a contact point, termed reference contact point (E), the normal to the reference circular arc (A0) at the reference contact point (E) intersecting the axis of revolution (100).

9. Filtration mechanism according to Claim 8, **characterized in that**, when the filtration mechanism (22) is in the reference position, at least one of the circular arcs (A0, A1, A2, A3, A4) of the profile moves closer to the pitch circle (G) while moving further away from the reference contact point.

10. Torsion filtration mechanism according to any one of the preceding claims, **characterized in that** the cam track (60) is directed radially outwards and the cam follower (36) is situated radially outside the cam track (60).

11. Torsion filtration mechanism according to either one of Claims 8 and 9, and Claim 10, **characterized in that** the reference circular arc (A0) has a finite or infinite radius which is strictly larger than the radius of the pitch circle (G).

12. Torsion filtration mechanism according to any one of the preceding claims, **characterized in that** the cam follower (36) comprises a follower roller (38) .

13. Torsion filtration mechanism according to any one of the preceding claims, **characterized in that** the cam track (36) is formed on a flexible strip (54) comprising a foot (56) fixed to the rotating member (24) bearing the cam track (60).

14. Torsion filtration mechanism according to any one of the preceding claims, **characterized in that** it additionally comprises:
- at least one other cam track (60) borne by one (24) of the first and second rotating members, the other cam track (60) being able to rotate about the axis of revolution (100) with the rotating member bearing the other cam track and coupled elastically to the rotating member bearing the other cam track (60) so as to have a degree of freedom of movement with respect to the rotating member bearing the other cam track (60), and
- at least one other cam follower (36) associated with the other cam track (60) and borne by the other (26) of the first and second rotating members, the other cam follower (36) travelling over the other cam track (60) while bringing about a variable movement of the other cam track (60) with respect to the rotating member bearing the other cam track,
**characterized in that** the other cam track has, in a section plane perpendicular to the axis of revolution, a profile constituted by a plurality of circular arcs (A0, A1, A2, A3, A4) adjacent in pairs, the profile being such that any two adjacent circular arcs among the circular arcs (A0, A1, A2, A3, A4) have different radii of curvature and a point of intersection, and have coincident tangents at the point of intersection.

15. Torsion filtration mechanism according to Claim 14, **characterized in that** the cam track (60) and the other cam track (60) have different profiles.
